(19) Europäisches Patentamt / European Patent Office / Office européen des brevets

(11) **EP 1 912 170 A1**

(12) **DEMANDE DE BREVET EUROPEEN**

(43) Date de publication:
**16.04.2008 Bulletin 2008/16**

(51) Int Cl.:
***G06Q 30/00*** (2006.01)

(21) Numéro de dépôt: **07291207.4**

(22) Date de dépôt: **04.10.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **10.10.2006 FR 0608861**

(71) Demandeur: **Criteo**
**75010 Paris (FR)**

(72) Inventeur: **Le Ouay, Franck**
**75011 Paris (FR)**

(74) Mandataire: **Plaçais, Jean Yves**
**Cabinet Netter,**
**36, avenue Hoche**
**75008 Paris (FR)**

(54) **Dispositif informatique de corrélation propagative**

(57) Un dispositif informatique de corrélation propagative comprend :
- une mémoire (4) pour stocker une matrice brute avec des identifiants d'objets, et des identifiants d'acteurs, un élément matriciel quantifié étant présent ou non,
- un module d'arrière-plan (6) pour convertir la matrice brute en des blocs matriciels reclassés, selon critère lié à l'élément matriciel quantifié, et
- un gestionnaire de sélection (16) pour rechercher un identifiant d'acteur d'entrée dans une première table dont des liens associent un identifiant d'acteur et un ou plusieurs blocs matriciels, et présenter une information dépendant des contenus du ou des blocs matriciels associés.

Le module d'arrière-plan comprend un classificateur croisé (12) pour convertir la matrice brute en blocs matriciels reclassés selon un critère combinant une métrique de présence de l'élément matriciel et une métrique de valeurs de l'élément matriciel, et le gestionnaire de sélection (16) travaille sur la base des blocs matriciels reclassés.

Fig. 1

**Description**

L'invention concerne le rapprochement entre elles de données a priori hétérogènes aux fins d'en tirer une proposition concrète, ce que l'on appellera ici une "corrélation propagative".

En général, les données concernées associent des objets du monde réel et leur perception ou évaluation, notamment par des personnes. Dès lors que le domaine global à traiter grandit, la charge informatique monte très vite, car elle est liée au produit du nombre d'objets par le nombre d'utilisateurs. On verra plus loin pourquoi.

Les techniques actuelles utilisent donc des modèles très approximatifs, ce qui nuit bien évidemment à la qualité des résultats obtenus.

L'invention vise à améliorer la situation.

A cet effet, l'invention propose un dispositif informatique de corrélation propagative qui comprend :

- une mémoire pour stocker une matrice brute qui croise des identifiant d'objets, et des identifiants d'acteurs, un élément matriciel quantifié étant présent ou non,

- un module d'arrière-plan capable de convertir la matrice brute en des blocs matriciels réarrangés, en fonction d'un critère lié à l'élément matriciel quantifié, et

- un gestionnaire de sélection, capable, à réception d'un identifiant d'acteur d'entrée, de rechercher cet identifiant d'acteur d'entrée dans une première table, qui contient des liens dont chacun associe un identifiant d'acteur et un ou plusieurs blocs matriciels associés à cet identifiant d'acteur, et de présenter une information dépendant des contenus du ou des blocs matriciels associés à l'identifiant d'acteur d'entrée.

Dans ce dispositif, le modèle d'arrière plan comprend un classificateur croisé pour convertir la matrice brute en blocs matriciels reclassés, selon un critère combinant une métrique de présence de l'élément matriciel, et une métrique de valeur de l'élément matriciel, le gestionnaire de sélection travaillant sur la base des blocs matriciels réarrangés.

Un tel dispositif permet d'obtenir des résultats extrêmement satisfaisants car cette approche permet de tenir compte à la fois des profils d'acteurs et des profils d'objets. La classification ainsi réalisée permet d'obtenir une configuration particulièrement adaptée aux problèmes "creux" qui sont caractéristiques de ce type d'évaluation.

De manière optionnelle et dans des modes de réalisation particuliers, le dispositif décrit ci-dessus peut présenter les caractéristiques suivantes :

- le module d'arrière-plan peut comporter un contrôleur pour appeler le classificateur croisé avec un critère relié à la présence de l'élément matriciel, pour rassembler à la fois les identifiants d'acteur par profil de présence/absence d'élément matriciel selon les identifiants d'objet, et les identifiants d'objet par profil de présence/absence d'élément matriciel selon les identifiants d'acteur, pour convertir la matrice brute en blocs matriciels intermédiaires ;

- le contrôleur peut appeler itérativement et sélectivement le classificateur croisé avec un critère relié à la valeur de l'élément matriciel sur certains au moins des blocs matriciels intermédiaires qui présentent des profils de présence/ absence d'éléments matriciels de densité choisie pour les convertir en blocs matriciels reclassés ;

- le module d'arrière-plan peut comporter en outre un lisseur propre à remplir des éléments matriciels vidés d'un bloc matriciel donné, en fonction d'un critère relié à la densité du profil de présence/absence d'éléments matriciels de ce bloc, pour obtenir un bloc dense rempli ;

- le lisseur peut remplir sélectivement par voisinage les éléments matriciels vides d'un bloc matriciel qui présente une densité d'un niveau choisi ;

- le lisseur peut remplir les éléments matriciels vides d'un bloc matriciel sur la base d'une itération croisant de manière sélective les valeurs des éléments matriciels voisins ;

- le lisseur peut remplir par moyenne les éléments matriciels vides d'un bloc matriciel qui présente une densité d'un niveau choisi ; et

- le gestionnaire de sélection peut présenter l'information en fonction d'une seconde table, qui contient des liens dont chacun associe un bloc matriciel et un ou plusieurs identifiants d'objets.

D'autres caractéristiques et avantages apparaîtront mieux à la lecture de la description qui suit, donnée à titre illustratif et non limitatif, d'exemples illustrés sur les dessins sur lesquels :

- la figure 1 montre une vue schématique des composants de l'invention ;

- la figure 2 et la figure 3 représentent une fonction réalisée par une partie hors-ligne de la figure 1 et ses résultats ;

- les figures 4 à 7 représentent des fonctions réalisées par une partie en ligne de la figure 1.

Les dessins et la description ci-après contiennent, pour l'essentiel, des éléments de caractère certain. Ils pourront donc non seulement servir à mieux faire comprendre la présente invention, mais aussi contribuer à sa définition le cas échéant.

En outre, la description détaillée est augmentée de l'annexe 1 qui présente une méthode particulière de remplissage collaboratif comme il sera décrit plus bas.

Cette annexe est mise à part dans un but de clarification, et pour faciliter les renvois. Elle forme une partie intégrante de la description, et pourra donc également contribuer à la définition de l'invention, le cas échéant.

Des solutions informatiques connues permettent de prévoir l'évaluation qu'une personne ferait d'un objet qu'elle ne connaît pas a priori, sur la base d'évaluations d'autres objets par d'autres personnes. Ces solutions consistent classiquement à regrouper en classes des objets ou des personnes qui ont des caractéristiques similaires. Ces groupes ou classes sont ensuite utilisés pour déterminer, en commun dans une telle classe, un paramètre d'évaluation que l'on va propager sur d'autres objets, pas encore traités. Cela comporte une sorte de prédiction, que l'on peut appeler, de façon réductrice, une "recommandation".

De nombreuses difficultés apparaissent dans ce domaine. En effet, les données disponibles sont en général assez hétéroclites et trop peu nombreuses. Il en découle que la corrélation propagative, ou, si l'on préfère la "recommandation", est de fiabilité tout au plus médiocre.

Concrètement, il faut arriver à découper l'ensemble global des objets possibles en des sous-ensembles contenant un nombre limité d'objets. Plus les sous-ensembles sont grands, plus on peut espérer trouver deux personnes (au moins) ayant exprimé des préférences ("évaluation") sur des objets "communs", et donc susceptibles de servir de base à une recommandation. Inversement, pour obtenir un processus aboutissant à des recommandations fiables, le nombre d'objets dans chaque sous-ensemble ne doit pas être trop important. En fait, cette présentation est simplifiée, car il faut à la fois beaucoup d'objets communs et beaucoup de personnes, ce qui est encore plus rare.

On comprend qu'il n'est pas raisonnablement possible de travailler d'un seul coup sur l'ensemble global des données accessibles, car cela entraînerait une charge informatique prohibitive, liée au produit du nombre d'objets par le nombre de personnes.

C'est pourquoi on utilise actuellement des méthodes simplifiées, voire aléatoires. C'est ce que font divers sites Internet et autres applications informatiques pour offrir une proposition à l'usager. Dans le cadre d'un site marchand par exemple, cette recommandation est utile pour proposer à un usager un produit supposé rejoindre ses goûts, et profiter ainsi d'une éventuelle vente supplémentaire.

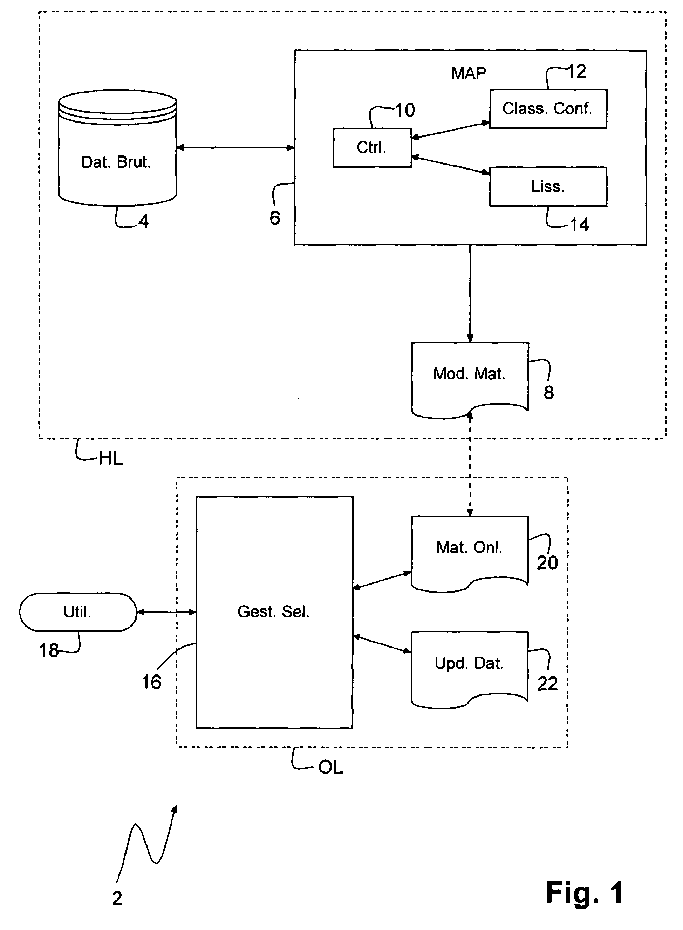

La figure 1 représente schématiquement les composants d'un dispositif informatique 2 selon l'invention. Le dispositif 2 comprend une partie hors ligne HL et une partie en ligne OL.

La partie HL comporte une source de données brutes 4 et un module d'arrière-plan 6 qui accède à la source 4 pour produire un modèle matriciel 8.

La source de données 4 peut être réalisée de diverses manières, au moyen par exemple d'une bases de données, comme la base de données MovieLens, ou encore d'une autre source de données comme un annuaire LDAP.

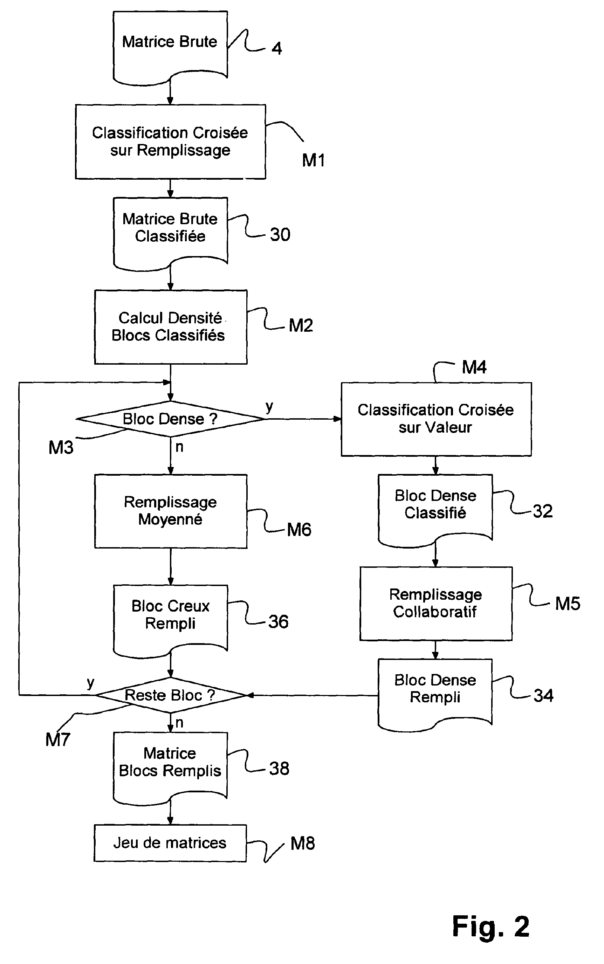

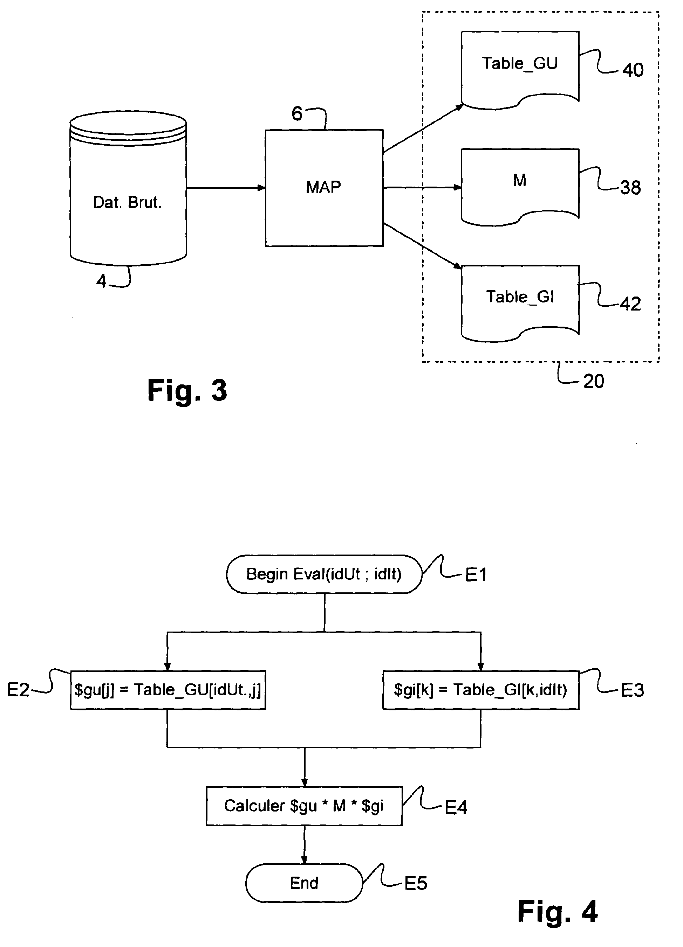

Le module d'arrière-plan 6 comporte un contrôleur 10 qui interagit avec un classificateur croisé 12 et un lisseur 14, comme cela sera précisé avec la description des figures 2 et 3. Le classificateur 12 et le lisseur 14 sont ici présentés comme des modules configurables, mais ils pourraient également être réalisés sous la forme de plusieurs modules spécialisés.

La partie en ligne OL comporte un gestionnaire de sélection 16 qui interagit avec un utilisateur 18 d'une part et avec un jeu de matrices en ligne 20 et une pile 22 de mise à jour d'autre part, pour réaliser des évaluations que l'on appelle ici recommandations, comme cela sera précisé avec la description de la figure 4.

L'utilisateur 18 peut être connecté directement sur un ordinateur ou un terminal mettant en oeuvre le dispositif 2, ou il peut être connecté à celui-ci par le biais d'un serveur Internet implémentant gestionnaire de sélection 16, au moyen d'un web service par exemple. De nombreuses autres implémentations sont possibles pour le gestionnaire de sélection 16.

Le jeu 20 est une copie du modèle matriciel 8 ou est au moins directement déductible de celui-ci. La pile 22 peut être réalisée sous la forme d'un tableau, d'une pile classique ou sous une autre forme appropriée.

Lorsque le module d'arrière-plan 6 achève de calculer le modèle 8, les données de la pile 22 sont intégrées à la source de données 4 et la matrice 20 est mise à jour avec le modèle 8 qui vient d'être calculé. Ensuite, le module d'arrière-plan 6 réitère le calcul du modèle 8 pour tenir compte des nouvelles données.

Le modèle matriciel 8 sera maintenant expliqué plus avant à l'aide des figures 2 et 3.

Comme représenté sur la figure 2, les données brutes disponibles sont tirées de la source 4. Dans une première étape M1, le contrôleur 10 appelle le classificateur 12 et opère sur ces données brutes une classification croisée, en utilisant un critère basé une métrique reflétant la présence ou non d'un élément matriciel pour chacune des lignes et colonnes.

La classification croisée est une méthode de tri connue qui consiste généralement à croiser simultanément les colonnes et les lignes d'un tableau de données selon un critère choisi.

Un exemple d'une méthode de classification croisée peut être trouvée dans "Information-theoretic co-clustering", par Inderjit S. Dhillon, Subramanyam Mallela, et Dharmendra S. Modha, aux pages 89-98 dans "Proceedings of the Ninth ACM SIGKDD International Conférence on Knowledge Discovery and Data Mining (KDD), 2003".

La classification croisée de l'étape M1 est double, de sorte que l'on obtient en sortie une matrice brute classifiée 30 qui est constituée de blocs matriciels de taille réduite d'une part et des matrices de passage qui permettent de retrouver la matrice originale. Les blocs matriciels peuvent être entièrement remplis ou présenter également des éléments matriciels non remplis.

Les blocs matriciels de la matrice 30 constituent une vue simplifiée de la matrice de départ. Ainsi, là où il pouvait exister par exemple des blocs de 1000*1000, il reste alors des blocs de 10*10. La double classification croisée s'accompagne de la création d'une matrice de passage, qui permet de reconstituer la matrice originale à partir des blocs réduits obtenus.

Comme on l'a précisé plus haut, la matrice de base est extrêmement creuse. Cela signifie qu'une quantité importante des éléments matriciels de cette matrice sont vides. Cette première métrique utilisée pour classifier les données, basée sur la présence ou non de l'élément matriciel, est destinée à permettre de distinguer les groupes qui présentent une quantité importante d'information des autres.

Dans une étape M2, le contrôleur 10 traite l'ensemble des blocs de la matrice 30 en calculant la densité de ces derniers. Cette densité est représentative du profil de présence/absence d'éléments matriciels dans chaque bloc.

Un test M3 relatif à la densité de chaque bloc détermine le type remplissage qui est alors appliqué aux éléments vides de ce bloc.

En effet, dans le mode de réalisation décrit ici, le module d'arrière-plan construit un modèle 8 qui ne contient aucun élément matriciel vide, et qui permet donc d'avoir une recommandation de chaque objet pour chaque acteur. Il serait néanmoins envisageable de ne remplir le modèle 8 que partiellement.

Lorsqu'un bloc donné présente une densité suffisante, le contrôleur 10 appelle à nouveau le classificateur 12 dans une étape M4 et réalise à nouveau une double classification croisée sur ce bloc, cette fois avec un critère basé sur une métrique reflétant la valeur des éléments matriciels de ce bloc. Il résulte de cette classification un bloc dense classifié intermédiaire 32, et les matrices de passage correspondantes.

Afin d'assurer que le bloc 32 soit entièrement rempli, le contrôleur 10 appelle le lisseur 14 dans une étape M5. Le lisseur 14 applique l'algorithme décrit dans l'annexe 1 jusqu'à ce qu'un critère de stabilité soit atteint.

Dans l'algorithme de l'annexe 1, on désigne par R la matrice des notes et R(u, a) est la note donnée par l'acteur u à l'objet a. On note P(u) l'ensemble des objets notés par l'acteur u et U(a) l'ensemble des acteurs qui ont noté l'objet a.

Le calcul itératif est initialisé avec deux matrices identité, appelées C0u (corrélations entre acteurs) et C0p (corrélations entre objets). A l'étape n, la matrice de corrélation entre acteurs est notée Cnu, et la matrice de corrélation entre objets est notée Cnp. Le calcul des matrices Cnu et Cnp est réalisé par croisement à partir des matrices calculées à l'étape précédente.

Ainsi, comme le montre la formule 11 de l'annexe 1, la matrice Cnu calculée à l'étape n est établie sur la base de la matrice C(n-1)p de l'étape (n-1). De même, comme le montre la formule 21, la matrice Cnp, également calculée à l'étape n, est établie sur la base de la matrice C(n-1)u de l'étape (n-1) 21. Les formules 12 à 14 et 22 à 24 précisent les éléments des formules 11 et 21.

Concrètement, l'algorithme de l'étape M5 consiste à remplir les éléments matriciels vides sur la base d'éléments matriciels voisins choisis (les objets notés par les acteurs pour la matrice Cnu, et les acteurs ayant noté les objets pour la matrice Cnp).

Le remplissage est réalisé par corrélation selon les lignes de la matrice dans un premier temps (Cnu), puis selon les colonnes dans un deuxième temps (Cnp). Les éléments matriciels vides sont donc remplis par une itération qui croise les valeurs d'éléments matriciels voisins, ce qui constitue un remplissage par corrélation à la fois sur les lignes et sur les colonnes.

Bien que l'on puisse voir cet algorithme sous la forme d'une alternance itération sur les lignes/itération sur les colonnes, il serait possible d'utiliser un algorithme qui, en une seule opération, réaliserait un type de remplissage similaire basé sur une corrélation à la fois sur les lignes et sur les colonnes.

Il résulte de cet algorithme un bloc dense rempli 34.

Dans le cas où le bloc 30 n'est pas dense, le contrôleur 10 appelle le lisseur 14 dans une étape M6 dont le résultat est un bloc creux rempli 36.

Le remplissage de l'étape M6 est un remplissage dit "moyenné", c'est-à-dire qu'il consiste à donner aux éléments matriciels vides la valeur de la moyenne des éléments non vides de ce bloc, s'il en existe, et à remplir tous les éléments matriciels vides sur la base d'une moyenne des éléments matriciels des blocs environnants si le bloc ne contient que des éléments matriciels vides.

Dans une étape M7, un test permet de vérifier si l'ensemble des blocs de la matrice 30 ont été traités. Le résultat obtenu est une matrice de blocs remplis 38 qui va servir de base aux modèle matriciel 8.

Dans une étape M8, le contrôleur établit le jeu de matrices en ligne 20. La figure 3 précise le jeu de matrices 20. Comme on peut le voir sur cette figure, le jeu de matrices 20 comporte la matrice 38 principale, une matrice ou table 40 appelée Table_GU et une matrice ou table 42 appelée Table_GI.

La matrice 38 contient des lignes désignant des groupes d'acteurs et des colonnes désignant des groupes d'objets. La matrice 40 contient des lignes désignant des identifiants d'acteurs et des colonnes désignant des groupes d'acteurs. La matrice 42 contient en ligne des groupes d'objets et en colonne des identifiants d'objets.

Les matrices 40 et 42 sont obtenues à partir des matrices de passage qui sont produites lors des diverses doubles classifications croisées, et sont construites en même temps que la matrice M.

Du fait de la métrique utilisée pour la double classification croisée utilisée dans l'exemple décrit ici, les matrices de passage 40 et 42 sont extrêmement creuses, et ne contiennent qu'une seule valeur non nulle par ligne pour la matrice 40, et une seule valeur non nulle par colonne pour la matrice 42.

Il serait cependant possible de réaliser une classification croisée impliquant une métrique pondérée, qui permettrait d'affecter les utilisateurs à plusieurs groupes de manière pondérée, et de même pour les objets.

La figure 4 montre un exemple d'une fonction d'évaluation basée sur le jeu 20, qui permet de d'évaluer une valeur d'un vote sur un objet qui a un identifiant d'objet idIt par un utilisateur qui a un identifiant d'acteur idUt, l'utilisateur n'ayant bien sûr pas évalué cet objet précédemment.

La fonction d'évaluation du gestionnaire de sélection 16 repose sur l'obtention préliminaire dans une étape E1 d'un couple d'identifiants (idUt, idIt) d'un acteur d'une part et d'un objet d'autre part.

Dans des étapes simultanées E2 et E3, le gestionnaire récupère dans les tables Table_GU et Table_GI (les matrices 40 et 42), la ligne correspondant à idUt et la colonne correspondant à idIt, et les stocke respectivement dans deux vecteurs \$gu et \$gi.

Dans une étape E4, l'évaluation est définie comme le produit \$gu*M*\$gi. Cette formule est basée sur l'hypothèse que la somme des termes des lignes de la table Table_Gu et la somme des termes des colonnes de la table Table_GI sont toutes deux égales à 1, de par une normalisation effectuée lors de la génération de ces deux tables.

Dans l'exemple ici décrit, comme les matrices 40 et 42 sont creuses, cela se résume à une multiplication. Cependant, cette formalisation matricielle prend tout son intérêt avec une classification avec pondération tel que mentionné plus haut. La valeur évaluée est ensuite retournée dans une étape E5.

La fonction d'évaluation décrite ci-dessus permet d'implémenter un nombre important de fonctions pour l'utilisateur 18. En effet, celui-ci peut directement désigner un objet dont il désire obtenir une évaluation, mais il peut également désigner un genre d'objets, que le gestionnaire de sélection 16 peut sélectivement associer à des identifiants d'objets et retourner leurs évaluations.

L'utilisateur 18 peut également fournir une évaluation choisie et obtenir du gestionnaire de sélection 16 une liste des objets qui correspondent à cette évaluation. Il est possible également de mélanger plusieurs de ces requêtes pour fournir une grande souplesse d'utilisation.

Pour que l'évaluation soit réalisable et raisonnablement fiable, il faut que l'utilisateur désigné par l'identifiant idUt ait des votes dans la source de données 4 ou dans la pile 22. Sinon, il n'est pas possible d'affecter cet utilisateur à un groupe de la table Table_GU et l'on ne peut faire qu'une évaluation basée par exemple sur la moyenne de tous les groupes de la table Table_GU.

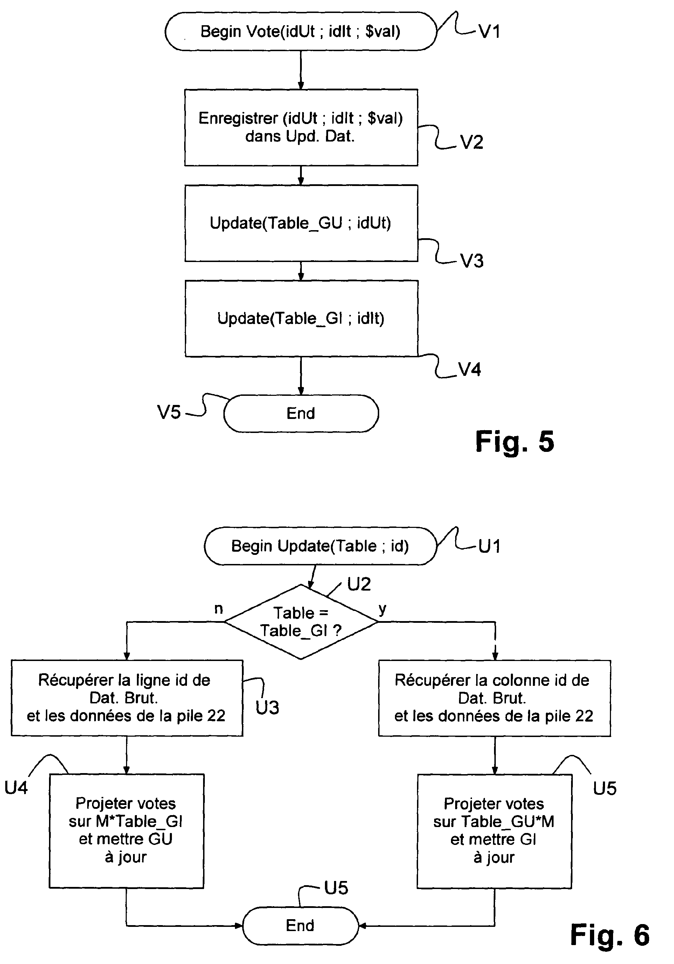

Pour mettre à jour les données d'un utilisateur donné et tenir compte de votes récents avant que le jeu 20 ait été mis à jour sur la base du modèle 8, le gestionnaire de sélection 16 utilise une fonction Vote représentée sur la figure 5.

Partant dans une étape V1 dans laquelle un utilisateur d'identifiant d'acteur idUt fournit au gestionnaire de sélection 16 un vote de valeur \$val concernant un objet d'identifiant d'objet idIt, le triplet (idUt, idIt, \$val) est d'abord enregistré dans la pile 22 dans une étape V2, pour intégration ultérieure à la source 4 et au modèle 8.

Ensuite, dans deux étapes V3 et V4 qui peuvent être réalisées en parallèle ou en série, le gestionnaire de sélection met à jour les matrices 40 et 42 sur la base respectivement de l'identifiant d'acteur idUt et de l'identifiant d'objet idIt.

Les étapes V3 et V4 peuvent également être réalisées de manière sélective et découplée dans le temps, afin de tenir compte du profil d'un utilisateur ou du produit concerné par le vote.

En effet, les premiers votes d'un utilisateur (respectivement les premiers votes reçus par un produit), ont une influence primordiale sur son classement dans un groupe d'acteurs donné (respectivement un groupe d'objets donné).

Chaque vote a alors tendance à le faire changer de groupe. Au bout d'un certain nombre de votes, l'appartenance à un groupe se stabilise, et il y a peu de chance qu'un vote seul le fasse changer.

Il semble donc plus important de mettre à jour la table Table_GU (respectivement la table Table_GI) lorsqu'un vote est enregistré pour un utilisateur présentant peu de votes, que pour un utilisateur ayant déjà de nombreux votes.

Lorsqu'un acteur (respectivement un produit) présente un nombre de votes important, par exemple 100, le module d'arrière-plan peut donc appliquer l'étape V3 (respectivement l'étape V4) de manière sélective et/ou décalée dans le temps, par exemple tous les dix votes, afin d'alléger la charge de calcul, et améliorer ainsi les performances de l'application.

La mise à jour est réalisée au moyen d'une fonction Update décrite avec la figure 6.

Dans une étape U1, la fonction est appelée avec comme argument la table à mettre à jour et le numéro d'identifiant id de la ligne ou de la colonne à mettre à jour. Cette mise à jour pourrait également être réalisée avec une unique fonction appelée avec les deux identifiants.

Dans une étape U2, on teste si la table à mettre à jour est celle des groupes d'acteurs (matrice 40 ou Table_GU) ou celle des groupes d'objets (matrice 42 ou Table_GI).

Si c'est la Table_GU, dans une étape U3, les valeurs des éléments matriciels associés à id dans la source 4 et celles contenues dans la pile 22 sont rassemblées dans un vecteur décrivant l'ensemble des votes (et non votes) de l'utilisateur lié à id.

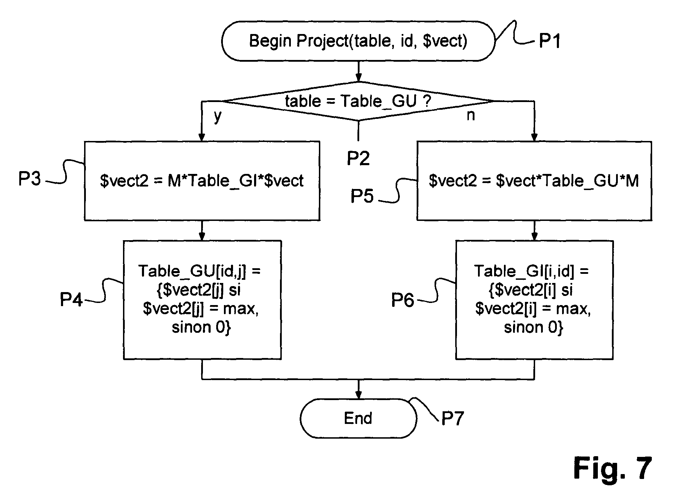

Le vecteur ainsi formé est alors "projeté" dans une étape U4 sur M*Table_GI, afin de déterminer à quel groupe d'acteurs cet utilisateur doit être rattaché. Un exemple de réalisation de l'étape U4 sera décrit ci-après à l'aide de la figure 7.

Si c'est la Table GI, dans une étape U5, les valeurs des éléments matriciels associés à id dans la source 4 et celles contenues dans la pile 22 sont rassemblées dans un vecteur décrivant l'ensemble des votes (et non votes) concernant l'objet lié à id.

Le vecteur ainsi formé est alors "projeté" dans une étape U6 sur Table_GU*M, afin de déterminer à quel groupe d'objets cet objet doit être rattaché. Un exemple de réalisation de l'étape U6 sera décrit ci-après à l'aide de la figure 7.

Dans une étape P1, la fonction Project représentée sur la figure 7 reçoit en argument la table que l'on souhaite mettre à jour, l'identifiant de la ligne ou de la colonne concernée, et le vecteur des votes décrit à partir de la figure 6.

Dans une étape P2, le type de table est déterminé et désigne l'opération qui va être effectuée. Si c'est la table Table_GU (matrice 40) qui est concernée, alors, la projection est effectuée dans une étape P3, en réalisant le produit M*Table_GI*$vect. Le vecteur colonne $vect2 qui résulte de ce produit est la "projection" décrite plus haut.

La table Table_GU est alors mise à jour dans une étape P4 en mettant à jour la ligne id de cette table, dans laquelle le seul terme non nul est celui dont la colonne correspond à l'indice qui représente la valeur maximale de $vect2. Ainsi, la table Table_GU garde la même forme que précédemment.

Comme décrit plus haut, il serait également possible de garder toutes les valeurs de $vect2 dans la table Table_GU, afin d'obtenir une affectation pondérée de l'utilisateur aux groupes d'acteurs.

Si c'est la table Table_GI qui est concernée alors des étapes P5 et P6 sont réalisées, selon des opérations similaires à celles des étapes P3 et P4 et qui apparaîtront de manière évidente au vu de la figure 6 et de ce qui précède.

On notera cependant que, dans le cas de l'étape P3, le vecteur $vect est un vecteur ligne, alors que dans le cas de l'étape P5, le vecteur $vect est un vecteur colonne.

Une fois la projection réalisée et la table mise à jour, la fin de cette fonction est réalisée dans une étape P7 et la suite des opérations précédentes suit son cours.

L'invention concerne également un code de programme d'ordinateur pour mettre en oeuvre le dispositif décrit ci-dessus, ainsi qu'un support informatique pour un tel programme.

Dans l'exemple ici décrit, le modèle est obtenu au moyen de deux doubles classifications croisées avec des critères basés sur une métrique de présence de l'élément matriciel d'une part, et une métrique de valeurs de l'élément matriciel d'autre part.

Cependant, il serait également envisageable de réaliser une unique double classification croisée avec un critère combinant ces deux métriques. En outre, il a été ici décrit des méthodes de calcul faisant appel au calcul matriciel classique, mais il serait possible de faire appel à des opérateurs matriciels légèrement modifiés, notamment pour prendre en compte le vide partiel des éléments d'un tel calcul.

**Annexe 1**

**Section 1**

$$C_u^n(u,v) = \frac{1}{\eta_{u,v}} \sum_{a \in P(u),\ b \in P(v)} C_p^{n-1}(a,b) \frac{R(u,a) - \mu_u}{\sigma_u} \frac{R(v,b) - \mu_v}{\sigma_v} \qquad (11)$$

$$\eta_{u,v} = \sum_{a \in P(u),\ b \in P(v)} C_p^{n-1}(a,b) \qquad (12)$$

$$\mu_u = \frac{1}{\eta_{u,v}} \sum_{a \in P(u),\ b \in P(v)} C_p^{n-1}(a,b) R(u,a) \qquad (13)$$

$$\sigma_u^2 = \frac{1}{\eta_{u,v}} \sum_{a \in P(u),\ b \in P(v)} C_p^{n-1}(a,b) \left( R(u,a) - \mu_u \right)^2 . \qquad (14)$$

**Section 2**

$$C_p^n(a,b) = \frac{1}{\eta_{a,b}} \sum_{u \in U(a),\ v \in U(b)} C_u^{n-1}(u,v) \frac{R(u,a) - \mu_a}{\sigma_a} \frac{R(v,b) - \mu_b}{\sigma_b} \qquad (21)$$

$$\eta_{a,b} = \sum_{u \in U(a),\ v \in U(b)} C_u^{n-1}(u,v) \qquad (22)$$

$$\mu_a = \frac{1}{\eta_{a,b}} \sum_{u \in U(a),\ v \in U(b)} C_u^{n-1}(u,v) R(u,a) \qquad (23)$$

$$\sigma_a^2 = \frac{1}{\eta_{a,b}} \sum_{u \in U(a),\ v \in U(b)} C_u^{n-1}(u,v) \left( R(u,a) - \mu_a \right)^2 \qquad (24)$$

**Revendications**

1.  Dispositif informatique corrélation propagative, comprenant :

- une mémoire (4) pour stocker une matrice brute qui croise des identifiants d'objets (idIt), et des identifiants d'acteurs (idUt), un élément matriciel quantifié étant présent ou non,
- un module d'arrière-plan (6) capable de convertir la matrice brute en des blocs matriciels reclassés, en fonction d'un critère lié à l'élément matriciel quantifié, et
- un gestionnaire de sélection (16), capable, à réception d'un identifiant d'acteur d'entrée, de rechercher cet identifiant d'acteur d'entrée dans une première table (40), qui contient des liens dont chacun associe un identifiant d'acteur (idUt) et un ou plusieurs blocs matriciels associés à cet identifiant d'acteur (idUt), et de présenter une information dépendant des contenus du ou des blocs matriciels associés à l'identifiant d'acteur d'entrée (idUt),

**caractérisé en ce que** le module d'arrière-plan comprend un classificateur croisé (12), pour convertir la matrice brute en blocs matriciels reclassés (32), selon un critère combinant une métrique de présence de l'élément matriciel, et une métrique de valeurs de l'élément matriciel,
**et en ce que** le gestionnaire de sélection (16) travaille sur la base des blocs matriciels reclassés (32).

2. Dispositif selon la revendication 1, **caractérisé en ce que** le module d'arrière-plan (6) comporte un contrôleur (10) pour appeler le classificateur croisé (12) avec un critère relié à la présence de l'élément matriciel, pour rassembler à la fois les identifiants d'acteurs (idUt) par profil de présence/absence d'élément matriciel selon les identifiants d'objets (idIt), et les identifiants d'objets (idIt) par profils de présence/absence d'élément matriciel selon les identifiants d'acteurs (idUt), pour convertir la matrice brute en blocs matriciels intermédiaires (30).

3. Dispositif selon la revendication 2, **caractérisé en ce que** le contrôleur (10) appelle itérativement et sélectivement le classificateur croisé (12) avec un critère relié à la valeur de l'élément matriciel sur certains au moins des blocs matriciels intermédiaires (30) qui présentent des profils de présence/absence d'éléments matriciels de densité choisie pour les convertir en blocs matriciels reclassés (32).

4. Dispositif selon l'une des revendications 1 à 3, **caractérisé en ce que** le module d'arrière-plan comprend en outre un lisseur (14), propre à remplir des éléments matriciels vides d'un bloc matriciel donné, en fonction d'un critère relié à la densité du profil de présence/absence d'éléments matriciels de ce bloc, pour obtenir un bloc rempli (34).

5. Dispositif selon la revendication 4, **caractérisé en ce que** le lisseur (14) est propre à remplir sélectivement par voisinage (M5) les éléments matriciels vides d'un bloc matriciel qui présente une densité d'un niveau choisi.

6. Dispositif selon la revendication 5, **caractérisé en ce que** le lisseur (14) est propre à remplir les éléments matriciels vides d'un bloc matriciel sur la base d'une itération croisant de manière sélective les valeurs des éléments matriciels voisins.

7. Dispositif selon la revendication 4, **caractérisé en ce que** le lisseur (14) est propre à remplir par moyenne (M6) les éléments matriciels vides d'un bloc matriciel qui présente une densité d'un niveau choisi.

8. Dispositif selon l'une des revendications précédentes, **caractérisé en ce que** le gestionnaire de sélection (16) présente l'information en fonction d'une seconde table (42), qui contient des liens dont chacun associe un bloc matriciel et un ou plusieurs identifiants d'objet (idIt).

9. Dispositif selon la revendication 8, **caractérisé en ce que** le gestionnaire de sélection (16) est capable de mettre à jour les tables (40, 42) sur la base d'un nouvel élément matriciel.

10. Dispositif selon la revendication 9, **caractérisé en ce que** le gestionnaire de sélection (16) est capable de stocker ledit élément matriciel dans la mémoire de stockage (4).

EP 1 912 170 A1

Fig. 1

9

Matrice Brute — 4

Classification Croisée
sur Remplissage — M1

Matrice Brute
Classifiée — 30

Calcul Densité
Blocs Classifiés — M2

Bloc Dense ? — M3

y → M4

Classification Croisée
sur Valeur

Bloc Dense
Classifié — 32

n

Remplissage
Moyenné — M6

Remplissage
Collaboratif — M5

Bloc Creux
Rempli — 36

Bloc Dense
Rempli — 34

Reste Bloc ? — M7

y

n

Matrice
Blocs Remplis — 38

Jeu de matrices — M8

**Fig. 2**

Table_GU — 40

MAP — 6

Dat. Brut.

4

M — 38

Table_GI — 42

20

## Fig. 3

Begin Eval(idUt ; idIt) — E1

E2 — $gu[j] = Table_GU[idUt.,j]

$gi[k] = Table_GI[k,idIt) — E3

Calculer $gu * M * $gi — E4

End — E5

## Fig. 4

Begin Vote(idUt ; idIt ; $val) — V1

Enregistrer (idUt ; idIt ; $val)
dans Upd. Dat. — V2

Update(Table_GU ; idUt) — V3

Update(Table_GI ; idIt) — V4

V5 — End

## Fig. 5

Begin Update(Table ; id) — U1

U2

n ← Table = Table_GI ? → y

Récupérer la ligne id de
Dat. Brut.
et les données de la pile 22 — U3

U4

Projeter votes
sur M*Table_GI
et mettre GU
à jour

Récupérer la colonne id de
Dat. Brut.
et les données de la pile 22 — U5

Projeter votes
sur Table_GU*M
et mettre GI
à jour

U5 — End

## Fig. 6

Begin Project(table, id, $vect) — P1

table = Table_GU ?

y        n

P2

P3  $vect2 = M*Table_GI*$vect

P5  $vect2 = $vect*Table_GU*M

P4  Table_GU[id,j] =
{$vect2[j] si
$vect2[j] = max,
sinon 0}

P6  Table_GI[i,id] =
{$vect2[i] si
$vect2[i] = max,
sinon 0}

End  P7

Fig. 7

Office européen
des brevets

**RAPPORT DE RECHERCHE EUROPEENNE**

Numéro de la demande

EP 07 29 1207

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/036640 A1 (TATENO KEI [JP] ET AL) 16 février 2006 (2006-02-16) * page 1, alinéa 3 - alinéa 15 * * page 1, alinéa 20 - page 3, alinéa 33 * * page 4, alinéa 55 - page 23, alinéa 400 * * figures * | 1-10 | INV. G06Q30/00 |
| X | WUJIAN YANG ET AL: "An improved collaborative filtering method for recommendations' generation" SYSTEMS, MAN AND CYBERNETICS, 2004 IEEE INTERNATIONAL CONFERENCE ON THE HAGUE, THE NETHERLANDS 10-13 OCT. 2004, PISCATAWAY, NJ, USA,IEEE, vol. 5, 10 octobre 2004 (2004-10-10), pages 4135-4139, XP010772976 ISBN: 0-7803-8566-7 * le document en entier * | 1-10 | |
| X | US 2004/158497 A1 (BRAND MATTHEW E [US]) 12 août 2004 (2004-08-12) * page 1, alinéa 2 - alinéa 17 * * page 2, alinéa 30 - page 5, alinéa 98 * * figures * | 1-10 | **DOMAINES TECHNIQUES RECHERCHES (IPC)** G06Q |
| A | BADRUL SARWAR ET AL: "Item-based collaborative filtering recommendation algorithms" PROCEEDINGS OF THE INTERNATIONAL CONFERENCE ON WORLD WIDE WEB, 1 mai 2001 (2001-05-01), pages 285-295, XP002228384 * le document en entier * | 1-10 | |

Le présent rapport a été établi pour toutes les revendications

| Lieu de la recherche | Date d'achèvement de la recherche | Examinateur |
|---|---|---|
| La Haye | 8 novembre 2007 | Rachkov, Vassil |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 1207

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-11-2007

| Document brevet cité au rapport de recherche | Date de publication | Membre(s) de la famille de brevet(s) | | Date de publication |
|---|---|---|---|---|
| US 2006036640 A1 | 16-02-2006 | CN | 1750003 A | 22-03-2006 |
| | | JP | 2006048286 A | 16-02-2006 |
| US 2004158497 A1 | 12-08-2004 | WO | 2004070640 A2 | 19-08-2004 |
| | | JP | 2006518075 T | 03-08-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **INDERJIT S. DHILLON ; SUBRAMANYAM MALLELA ; DHARMENDRA S. MODHA.** Information-theoretic co-clustering. *Proceedings of the Ninth ACM SIGKDD International Conférence on Knowledge Discovery and Data Mining (KDD,* 2003, 89-98